# EUROPÄISCHE PATENTANMELDUNG

(11) **EP 0 924 936 A2**
(43) Veröffentlichungstag der Anmeldung: **23.06.1999**
(21) Anmeldenummer: 98204201.2
(22) Anmeldetag: 10.12.1998
(51) Int. Cl.: H04N 9/11

(54) **Abtastgerät für Farbfilm**

(30) Priorität: 18.12.1997 DE 19756362
(71) Anmelder: Philips Patentverwaltung GmbH, 22335 Hamburg (DE); Koninklijke Philips Electronics N.V., 5621 BA Eindhoven (NL)
(72) Erfinder: Steinebach, Wolfgang, Dipl.-Ing., Philips Patentv., 22335 Hamburg (DE)
(74) Vertreter: Schmalz, Günther, Dipl.-Ing.

(57) **Zusammenfassung**

Bei einem Bildabtaster zur Erzeugung von Farbkomponentensignalen, mit einer Beleuchtungseinrichtung zur Be- bzw. Durchleuchtung eines Bildes mittels mono-chromatischer Lichtquelle und Abtastelementen zur Wandlung des vom be- bzw. durchleuchteten Bild erhaltenen Lichts in ein Farbkomponentensignal, schlägt die Erfindung zur Verbesserung der Farbtrennung bzw. zur Verringerung des Farbübersprechens vor, dass die Beleuchtungseinrichtung so ausgestaltet ist, dass die monochromatischen Lichtquellen das Filmbild an voneinander getrennten Stellen belichten und dass die Sensoren so angeordnet sind, dass sie von der jeweils ihnen zugeordneten Lichtquelle beleuchtet werden.

## Beschreibung

Die Erfindung betrifft einen Bildabtaster zur Erzeugung von Farbkomponentensignalen, mit einer Beleuchtungseinrichtung zur Be- bzw. Durchleuchtung eines Bildes, mit monochromatischen Lichtquellen und Abtastelementen zur Wandlung des vom be- bzw. durchleuchteteten Bild erhaltenen Lichts in ein Farbkomponentensignal. Die Erfindung betrifft insbesondere einen Filmabtaster zur Abtastung von kinematografischem Filmmaterial.

Filmabtaster enthalten beispielsweise CCD-Elemente zur Abtastung eines Films, wobei der abzutastende Film im allgemeinen mit einer Halogen- oder Xenon-Lichtquellen beleuchtet bzw. durchleuchtet wird. In einem Filmabtaster wird der Film dabei mit Hilfe einer Filmtransportvorrichtung an einer Farbkamera vorbeigeführt. Zur Erzeugung eines sich aus drei Farbkomponenten zusammensetzenden Farbsignals werden in der Farbkamera drei Sensoren verwendet, wobei durch vorgesetzte Farbfilter jeder Sensor nur in einem bestimmten spektralen Bereich empfindlich ist. Das Filmbild wird entweder über Prismenteiler auf Sensoren abgebildet, die in entsprechend unterschiedlichen Positionen angeordnet sind, oder es werden drei auf einem Chip und in einem Gehäuse liegende Sensoren belichtet. Solche Trilinear-Sensoren besitzen zur Farbtrennung im Gehäuse integrierte Farbfilter. Sie bieten den Vorteil eines geringeren Platzbedarfs und verringertem Aufwand bei der mechanischen Justage.

Ein Problem hierbei ist, dass die Sensoren unterschiedliche spektrale Empfindlichkeiten aufweisen, so dass die Beleuchtungsstärke entsprechend dem empfindlichsten Sensor eingestellt wird. Dies hat zur Folge, dass die einzelnen Sensoren unterschiedlich ausgesteuert werden. Um dies zu vermeiden, wurde in US 5,392,080 bei einem Filmabtaster mit bildweiser Ausrichtung und Abtastung vorgeschlagen, zur Beleuchtung eine aus drei monochromatischen Lichtquellen gebildete Beleuchtungseinrichtung vorzusehen, bei der die Intensität jeder Lichtquelle unabhängig von den anderen Lichtquellen eingestellt werden kann. Vor der Beleuchtung des abzutastenden Films werden die Lichtströme dieser Lichtquellen in einem kugelförmigen Integrator zu einem einzigen, diffusen Lichtstrom gemischt.

Hierbei bleibt jedoch das Problem bestehen, dass die spektrale Empfindlichkeit eines Sensors in Nachbarspektralbereichen Nebenmaxima aufweisen kann, wodurch trotz der drei monochromatischen Lichtquellen noch ein Übersprechen in den einzelnen Sensoren auftreten kann.

Aufgabe der Erfindung ist es eine Lösung anzugeben, bei der die Sensoren ausschliesslich Farbkomponentensignale ihrer jeweiligen Farbkomponente abgeben.

Diese Aufgabe wird dadurch gelöst, dass die Beleuchtungseinrichtung so ausgestaltet ist, dass die monochromatischen Lichtquellen das Filmbild an voneinander getrennten Stellen beleuchten und dass die Sensoren so angeordnet sind, dass sie ausschliesslich von der jeweils ihnen zugeordneten Lichtquelle beleuchtet werden.

Die Erfindung hat den Vorteil, dass ein Übersprechen zwischen den einzelnen Farbkomponenten allein durch die mechanische Konstruktion der Lichtführung der zur Beleuchtung verwendeten monochromatischen Lichtquellen aufnahmeseitig völlig ausgeschlossen wird, da jeder Sensor jeweils nur von einer der Lichtquellen beleuchtet wird. Die Erfindung hat des weiteren den Vorteil, dass den Sensoren keine Farbfilter vorgesetzt sein müssen. Da jeder Farbfilter das durchzulassende Licht in einem gewissen Maße dämpft, kann die Beleuchtungsstärke entsprechend reduziert werden.

In einer weiteren Ausgestaltung der Erfindung sind die einzelnen Lichtquellen der Beleuchtungseinrichtung aus Laserlichtquellen gebildet. Da Laserlicht streng monochromatisch ist, wird hiermit auch beleuchtungsseitig einem Farbübersprechen vorgebeugt, im Gegensatz zu Lichtquellen, deren Monochromität von der Güte der verwendeten Filter abhängig ist.

Die Erfindung wird nun anhand eines in der einzigen Figur dargestellten Ausführungsbeispielen näher beschrieben und erläutert.

Es zeigt:

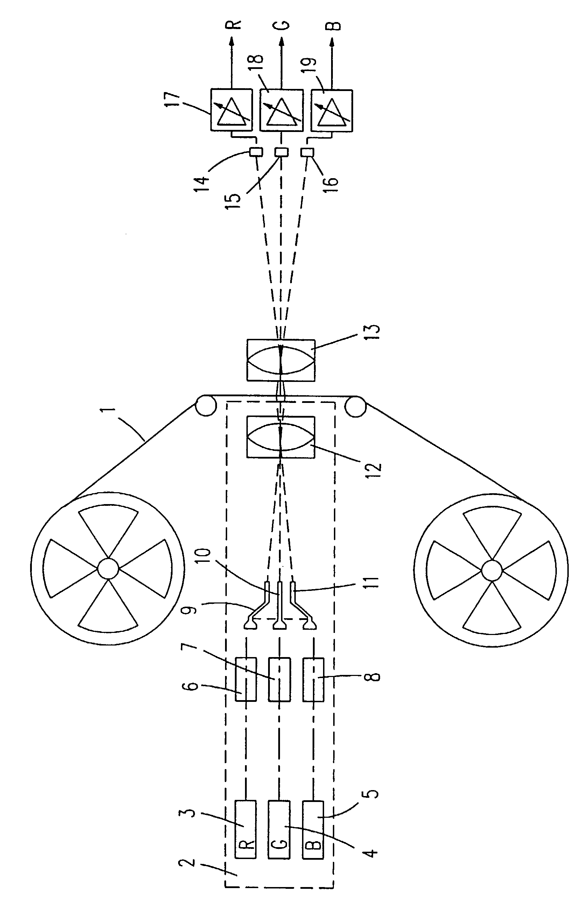

- Fig. 1: Einen Filmabtaster mit getrennten Lichtquellen und getrennter Beleuchtung des abzutastenden Films.

Die hier beschriebene Anordnung eignet sich insbesondere für einen Filmabtaster mit kontinuierlichem Filmtransport. Hierbei wird ein Film 1 mittels einer nicht dargestellten Filmtransporteinrichtung durch ein Abtastfenster hindurch transportiert und von einer Beleuchtungseinrichtung 2 beleuchtet. Im Ausführungsbeispiel wird die Beleuchtungseinrichtung 2 gebildet aus drei Beleuchtungsquellen 3, 4, 5, drei Dämpfungsgliedern 6, 7, 8, drei Querschnittswandlern 9, 10, 11 und einem beleuchtungsseitigen, optischen System 12. Bei diesem Ausführungsbeispiel sind als Beleuchtungsquellen Laserdioden 3, 4, 5 in den Grundfarben Rot (z.B. He-Ne), Grün (z.B. Ar-Ion) und Blau (z.B. He-Cd) vorgesehen. Die drei Laserstrahlen durchlaufen zunächst jeder für sich die steuerbaren Dämpfungsglieder 6, 7, 8, mittels welchen die Intensität jedes Laserstrahls unabhängig von der Intensität der anderen beiden Laserstrahlen eingestellt werden kann. Eine Steuerung bzw. Regelung der drei verschiedenen Lichtquellen in ihrer Intensität in der Filmebene hat unter anderen den Vorteil, dass unabhängig vom jeweils verwendeten Filmtyp die Abtastsensoren mit jeweils optimaler Aussteuerung beleuchtet werden. Somit arbeiten alle Abtastsensoren mit jeweils bestmöglichstem Signal-Rauschabstand. Des weiteren kann auf Farbbalancefilter völlig verzichtet werden.

Die punktförmigen Lichtstrahlen der drei Laserlichtquellen 3, 4, 5 werden mittels der Querschnittswandler 9, 10, 11 zu jeweils einem horizontalen Spalt aufgeweitet. Diese Spalte wird zur Beleuchtung auf das im Abtastfenster stehende Filmbild abgebildet.

Vorzugsweise werden die durch die Querschnittswandler 9, 10, 11 zu Lichtspalten erweiterten Lichtpunkte mittels des beleuchtungsseitigen, optischen System 12 derart auf dem Film abgebildet, dass der Abstand der Spalte möglichst klein wird. Hierdurch kann sichergestellt werden, dass Positionierungsfehler des Films 1, während der Film 1 zwischen dem ersten und dem letzten Beleuchtungsspalt hindurch transportiert wird, möglichst gering ausfallen.

Mittels Sensoren 14, 15, 16 - im Ausführungsbeispiel wurden CCD-Zeilenelemente gewählt - wird das zeilenweise durchleuchtete Filmbild abgetastet. Vorzugsweise wird mittels eines sensorseitigen optischen Systems 13, beispielsweise einem Prismenteiler, das Abbild der Filmebene weiter aufgespalten, so dass die einzelnen Sensoren 14, 15, 16 in einem grösseren Abstand voneinander angeordet werden können. Auf diese Weise kann eine Beeinflussung von Streulicht einer der anderen Lichtquellen auf den jeweiligen Sensor 14, 15, 16 vermieden werden.

Die Abtastsignale der Sensoren werden in Verstärkerstufen 17, 18, 19 verstärkt, wobei der Verstärkungsfaktor der Verstärkerstufen 17, 18 , 19 einzeln einstellbar ist, um eine Farbkorrektur vornehmen zu können. Da die Filmspalte erfindungsgemäß an verschiedenen Orten auf dem Filmbild abgebildet wird, müssen die Abtastsignale der einzelnen Farbkomponenten zum Ausgleich des Laufzeitunterschiedes unterschiedlich verzögert werden.

Mit dem beschriebenen Filmabtaster wird die Aufspaltung des abgetasteten Filmbildes in einen Rot-, Grün und Blau-Farbauszug nicht wie bisher mittels zwischen dem abzutastenden Filmbild und den Sensoren angeordneter Farbfilter vorgenom men, sondern das Filmbild selbst wird an den drei Orten, die der Bildlage der CCD's entsprechen, mit Licht der gewünschten spektralen Komponenten beleuchtet. Es versteht sich von selbst, dass das vorgestellte Prinzip nicht auf Filmabtaster beschränkt ist, sondern allgemein auch bei der Abtastung von Einzelbildern, beispielsweise in Farbscannern eingesetzt werden kann.

## Patentansprüche

1. Bildabtaster zur Erzeugung von Farbkomponentensignalen, mit einer Beleuchtungseinrichtung zur Be- bzw. Durchleuchtung eines Bildes, mit monochromatischen Lichtquellen und Abtastelementen zur Wandlung des vom be- bzw. durchleuchteten Bild erhaltenenen Lichts in ein Farbkomponentensignal,
dadurch gekennzeichnet,
dass die Beleuchtungseinrichtung so ausgestaltet ist, dass die monochromatischen Lichtquellen (3, 4, 5) das Filmbild an voneinander getrennten Stellen beleuchten und dass die Sensoren (14, 15, 16) so angeordnet sind, dass sie von der jeweils ihnen zugeordneten Lichtquelle (3, 4, 5) beleuchtet werden.

2. Bildabtaster nach Anspruch 1,
dadurch gekennzeichnet,
dass die einzelnen Lichtquellen (3, 4, 5) aus Laserlichtquellen gebildet sind.

3. Bildabtaster nach Anspruch 2,
dadurch gekennzeichnet,
dass zwischen Laserdioden (3, 4, 5) und dem abzutastenden Bild Querschnittswandler (9, 10, 11) angeordnet sind.

4. Bildabtaster nach einem der vorangehenden Ansprüche,
dadurch gekennzeichnet,
dass der Bildabtaster ein Filmabtaster zur Abtastung von kinematografischem Filmmaterial ist.

5. Filmabtaster nach Anspruch 4,
dadurch gekennzeichnet,
dass als Sensoren (14, 15, 16) CCD-Zeilensensoren vorgesehen sind.

6. Filmabtaster nach Anspruch 4 oder 5,
dadurch gekennzeichnet,
dass der Filmabtaster ein Filmabtaster mit kontinuierlichem Filmtransport ist.
